# EUROPÄISCHE PATENTSCHRIFT

(11) **EP 2 530 340 B1**
(45) Veröffentlichungstag und Bekanntmachung des Hinweises auf die Patenterteilung: **25.06.2014**
(21) Anmeldenummer: 11166910.7
(22) Anmeldetag: 20.05.2011
(51) Int. Cl.: F16C 32/04

(54) **Magnetisches Radiallager mit drei-phasiger Ansteuerung**
Magnetic radial bearing with three-phase control
Palier radial magnétique doté d'une commande triphasée

(43) Veröffentlichungstag der Anmeldung: 05.12.2012
(73) Patentinhaber: Siemens Aktiengesellschaft, 80333 München (DE)
(72) Erfinder: Vollmer, Rolf, 36129, Gersfeld (DE)

(56) Entgegenhaltungen:
- WO-A1-97/07341
- DE-B3-102007 028 229

## Beschreibung

Die vorliegende Erfindung betrifft ein magnetisches Radiallager mit einem Stator, der eine erste Spule, eine zweite Spule, eine dritte Spule und eine vierte Spule ausweist, von denen sich die erste Spule und die dritte Spule auf einer ersten Achse sowie die zweite und die vierte Spule auf einer zweiten Achse gegenüberstehen. Darüber hinaus betrifft die vorliegende Erfindung ein Verfahren zum Steuern eines derartigen magnetischen Radiallagers.

Magnetische Radiallager erzeugen in rotierenden Wellen Wirbelströme. Diese führen zu unerwünschter Erwärmung der Welle. Die damit verbundene Verlustleistung reduziert den Wirkungsgrad der Maschine. Ein geblechter magnetischer Rückschluss auf der Welle, der die Wirbelströme reduzieren würde, verringert die Steifigkeit der Welle.

Es wurde bislang daher ein Kompromiss aus möglichst geringen Wirbelstromverlusten und möglichst hoher Steifigkeit gesucht. Für die Wirbelstromverluste sind im Wesentlichen die Polzahlen der Magnetfelder, die Wellendrehzahl und die Art der Blechung verantwortlich. Um geringe Ummagnetisierungsfrequenzen zu erreichen, wird eine geringe Polzahl angestrebt. Dadurch dringt aber das magnetische Feld tief in den Rotor ein und erfordert somit eine Blechung mit hohem Rotorjoch, was dann zu einer dünnen Welle führt. Wenn kritische Schwingneigungen überschritten werden, muss die Polzahl erhöht werden, was wieder zu höheren Frequenzen und Verlusten führt.

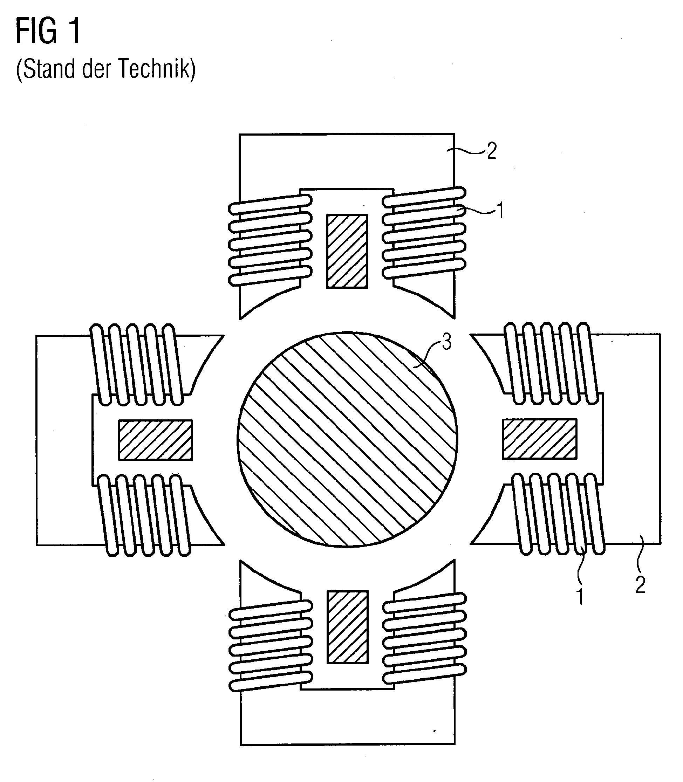

In FIG 1 ist ein Querschnitt durch ein herkömmliches radiales Magnetlager dargestellt. Der Stator weist hier acht in axiale Nuten eingelegte Spulen auf, wobei in FIG 1 lediglich die Spulen 1 und die Spulenkerne 2 schematisch angedeutet sind. Im Inneren des Stators wird ein Rotor 3 magnetisch gehalten. Bei dem Rotor 3 handelt es sich um die zu lagernde Welle. Die Achsen der Spulen 1 verlaufen hier im Wesentlichen radial bezüglich der Drehachse des Rotors 3.

Ferner offenbart z.B. WO 97/07341 ein gattungsgemäßes Lager un Verfahren.

Aus dem Buch "Magnetic Bearings" von Gerhard Schweitzer und Eric H. Maslen, Springerverlag Berlin, 2009, XV, Seiten 82 bis 84 und 96 sind auch radiale Magnetlager mit axialen Spulen bekannt. Dies bedeutet, dass sich die Spulenachsen parallel zur Lagerachse erstrecken. Dementsprechend erfolgt die Flussführung sowohl in den Spulen als auch im Rotor im Wesentlichen in axialer Richtung.

Die Aufgabe der vorliegenden Erfindung besteht darin, ein einfach und zuverlässig steuerbares bzw. regelbares radiales Magnetlager zur Verfügung zu stellen. Darüber hinaus soll auch ein geeignetes Verfahren zum Steuern des magnetischen Radiallagers bereitgestellt werden.

Erfindungsgemäß wird diese Aufgabe gelöst durch ein magnetisches Radiallager mit
- einem Stator, der eine erste Spule, eine zweite Spule, eine dritte Spule und eine vierte Spule aufweist, von denen sich die erste Spule und die dritte Spule auf einer ersten Achse sowie die zweite und die vierte Spule auf einer zweiten Achse gegenüberstehen, und mit
- einer Ansteuereinrichtung zum Ansteuern der Spulen des Stators mit einem 3-phasigen Strom, der die Phasen U, V und W aufweist, wobei
- zur Steuerung der ersten Achse
   o ein erster Anschluss der zweiten Spule und ein erster Anschluss der vierten Spule mit der Phase U,
   o ein zweiter Anschluss der zweiten Spule mit der Phase W und
   o ein zweiter Anschluss der vierten Spule mit der Phase V verbunden ist,
- zur Steuerung der zweiten Achse
   o ein erster Anschluss der ersten Spule und ein erster Anschluss der dritten Spule mit der Phase U,
   o ein zweiter Anschluss der ersten Spule mit der Phase W und
   o ein zweiter Anschluss der dritten Spule mit der Phase V verbunden ist,
- die Amplituden der Ströme der Phasen U, V und W jeweils mit einer untereinander um 120 Grad phasenverschoben Sinusfunktion bewertet sind, und
- die Ansteuerung durch die Ansteuereinrichtung für jede der Achsen jeweils in einem variablen Arbeitspunkt erfolgt, der für die einzelnen Phasen entsprechend der jeweiligen Sinusfunktion den Wert für die Bewertung der Amplituden festlegt.

Darüber hinaus wird erfindungsgemäß bereitgestellt ein Verfahren zum Steuern eines magnetischen Radiallagers mit einem Stator, der eine erste Spule, eine zweite Spule, eine dritte Spule und eine vierte Spule aufweist, von denen sich die erste Spule und die dritte Spule auf einer ersten Achse sowie die zweite und die vierte Spule auf einer zweiten Achse gegenüberstehen, durch
- Ansteuern der Spulen des Stators mit einem 3-phasigen Strom, der die Phasen U, V und W aufweist, wobei
- zur Steuerung der ersten Achse
   o ein erster Anschluss der zweiten Spule und ein erster Anschluss der vierten Spule mit der Phase U,
   o ein zweiter Anschluss der zweiten Spule mit der Phase W und
   o ein zweiter Anschluss der vierten Spule mit der Phase V verbunden ist,
- zur Steuerung der zweiten Achse
   o ein erster Anschluss der ersten Spule und ein erster Anschluss der dritten Spule mit der Phase U,
   o ein zweiter Anschluss der ersten Spule mit der Phase W und
   o ein zweiter Anschluss der dritten Spule mit der Phase V verbunden ist,
- die Amplituden der Ströme der Phasen U, V und W jeweils mit einer untereinander um 120 Grad phasenverschoben Sinusfunktion bewertet werden, und
- die Ansteuerung für jede der Achsen jeweils in einem variablen Arbeitspunkt erfolgt, der für die einzelnen Phasen entsprechend der jeweiligen Sinusfunktion den Wert für die Bewertung der Amplituden festlegt.

In vorteilhafter Weise können die Spulen des Radiallagers dreiphasig angesteuert werden, und es kann eine sehr niedrige Polzahl erreicht werden, nämlich die Polpaarzahl p = 0 für die Grunderregung bzw. Vormagnetisierung. Das Tragfeld lässt sich mit einer Polpaarzahl p = 1 erzeugen. Insgesamt lassen sich so sehr geringe Ummagnetisierungsfrequenzen erzielen, sodass die Wirbelstromverluste entsprechend gering sind.

Vorzugsweise steht die erste Achse senkrecht auf der zweiten Achse. Damit können orthogonale Kräfte erzeugt werden, mit denen der Rotor exakt in der Mitte des Stators gehalten werden kann.

In einer bevorzugten Ausführungsform ist für den variablen Arbeitspunkt ein Arbeitsbereich definiert, der zwischen zwei Grenzwerten liegt, welche von einem Winkelwert einen vorgegebenen Abstand besitzen, wobei der Winkelwert einem Schnittpunkt zweier der Sinusfunktionen zugeordnet ist. Die Beschränkung des Arbeitspunkts auf den Arbeitsbereich gewährleistet, dass stets die gewünschten Kräfte von den einzelnen Spulen erzeugt werden.

Speziell kann der Arbeitsbereich eine Ausdehnung von n/3 aufweisen. Bei dieser Ausdehnung des Arbeitsbereichs sind stets eindeutige Kraftverhältnisse der Spulen gegeben.

Weiterhin ist es von Vorteil, wenn die Spulen des Stators jeweils bzgl. der Rotationsachse des Radiallagers axiale Spulen sind. Dies hat den Vorteil, dass das Radiallager sehr kompakt gebaut werden kann.

Weiterhin sollten die Spulen des Stators den gleichen Wickelsinn besitzen. Dadurch lässt sich die Ansteuerung einfacher gestalten.

Wie oben bereits angedeutet wurde, ist in einer bevorzugten Ausführungsform die Grunderregung der Spulen durch die Ansteuereinrichtung mit einer Polpaarzahl p = 0 einstellbar. Dies hat den genannten Vorteil der geringen Wirbelstromverluste.

Außerdem kann mit der Ansteuereinrichtung eine Tragerregung der Spulen mit einer Polpaarzahl p = 1 einstellbar sein. Damit kann bei sehr niedriger Polpaarzahl eine Kraft in die Richtung einer der Achsen senkrecht zur Rotationsachse des Rotors erzielt werden. Da die Polpaarzahl wiederum sehr gering ist, ist mit entsprechend geringen Wirbelstromverlusten zu rechnen.

Die vorliegende Erfindung wird anhand der beigefügten Zeichnungen näher erläutert, in denen zeigen:
- FIG 1: einen Querschnitt durch ein herkömmliches magneti-sches Radiallager;
- FIG 2: einen Querschnitt durch ein erfindungsgemäßes mag-netisches Radiallager;
- FIG 3: einen Schnitt entlang einer der Achsen X, Y durch das magnetische Radiallager von FIG 2;
- FIG 4: eine Schaltung der Spulen des magnetischen Radial-lagers mit dreiphasiger Ansteuerung und
- FIG 5: eine Bewertung der Ansteuerströme der drei Phasen.

Die nachfolgend näher geschilderten Ausführungsbeispiele stellen bevorzugte Ausführungsformen der vorliegenden Erfindung dar.

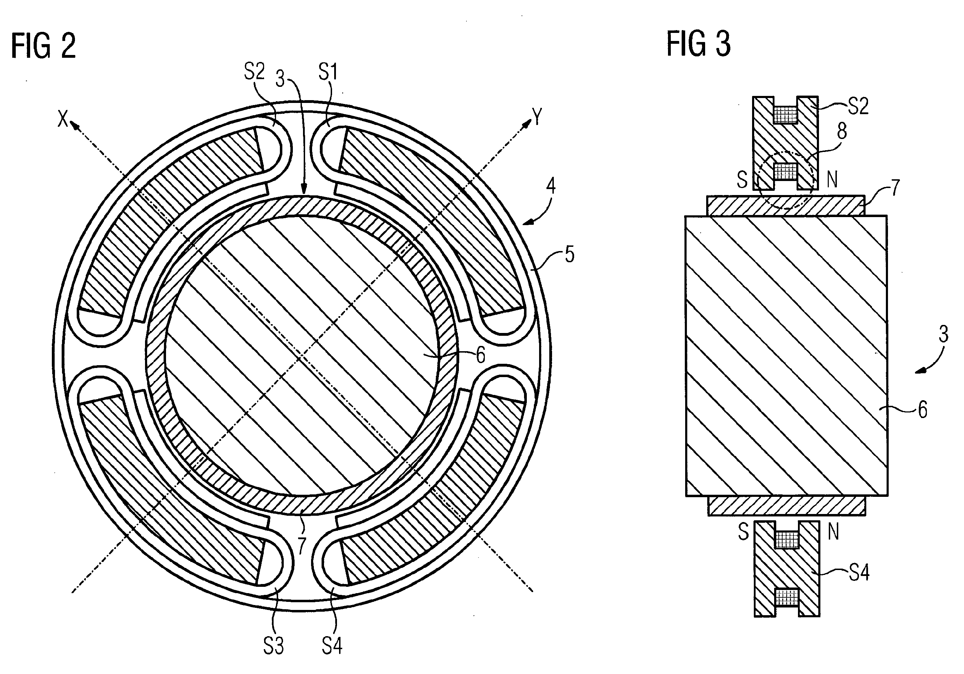

In dem Ausführungsbeispiel von FIG 2 ist ein magnetisches Radiallager mit einem Stator 4 und einem Rotor 3 dargestellt. Der Stator 4 besitzt ein Gehäuse 5, das hohlzylindrisch ausgebildet ist. Im Inneren des Gehäuses 5 befinden sich, angeschmiegt an die Gehäusewand oder zumindest der Gehäusewand nachgebildet vier Spulen S1, S2, S3 und S4. Bei diesen Spulen S1 bis S4 handelt es sich um Axialspulen bzw. axiale Spulen. Dies bedeutet, dass die Spulenachse parallel zur Lagerachse (senkrecht zur Zeichnungsebene von FIG 2) verläuft. In der Schnittdarstellung von FIG 2 erstreckt sich jede Spule S1 bis S4 in einem Quadranten innerhalb des Gehäuses 5. Jede Spule erstreckt sich nahezu über die gesamten 90° des jeweiligen Quadranten. Dabei verlaufen jeweils ein äußerer Abschnitt und ein innerer Abschnitt konzentrisch zu dem Gehäuse 5. Im Inneren des Lagers ergibt sich dadurch ein Freiraum, in dem der Rotor 3 frei beweglich ist. Der Rotor 3 besitzt hier eine Welle 6, die mantelartig von einem Blech 7 umgeben ist. Zwischen dem Rotor 3 und dem Stator 4 befindet sich der Lagerspalt, der typischerweise 2/10 bis 3/10 mm beträgt.

Die Spulen S2 und S4 stehen sich auf einer ersten Achse X gegenüber, die die Winkelhalbierende des zweiten und vierten Quadranten bildet und durch die Lagerachse verläuft. Außerdem stehen sich die Spulen S1 und S3 auf einer zweiten Achse Y gegenüber, die die Winkelhalbierende des ersten Quadranten und des dritten Quadranten bildet und ebenfalls durch die Lagerachse verläuft. Dementsprechend üben die Spulen S2 und S4 in erster Linie Kräfte entlang der X-Achse und die Spulen S1 und S3 in erster Linie Kräfte auf der Y-Achse aus.

In FIG 3 ist das magnetische Radiallager von FIG 2 entlang eines axialen Schnitts durch die X- oder Y-Achse dargestellt. In dieser Darstellung ist der Rotor mit der Welle 6 und dem Blech 7 gut zu erkennen. Er ist hier erkennbar umgeben von den Spulen S2 und S4. Symbolisch ist in FIG 3 auch die Flussführung 8 des magnetischen Flusses dargestellt. Demnach wird der magnetische Fluss in axialer Richtung durch die Spule geführt und außerhalb der Spule in entgegengesetzter Richtung durch das Blech 7 zurückgeführt. Durch die vier axialen Spulen kann ein magnetisches Radiallager mit dicker Welle 6 und geringer Rotorblechtiefe sowie kurzer Bauweise realisiert werden.

Insbesondere ist bei dieser Bauweise eine axiale Flussführung mit niedrigster Polzahl möglich. Die Vormagnetisierung kann durch ein Feld mit der Polpaarzahl p = 0 erzeugt werden. Dabei sind am Umfang verteilt lauter Nordpole N oder lauter Südpole S angeordnet. Dies ist in FIG 3 mit den Symbolen N und S angedeutet.

Sind die Pole am Umfang gleichstark ausgeprägt, entspricht dies einer Grunderregung ohne Tragkraft. Ist hingegen Tragkraft erforderlich (die Welle 6 ist entgegen der Gewichtskraft nach oben zu ziehen), so sind die Pole in den Spulen S1 und S2 stärker auszubilden als die Pole in den Spulen S3 und S4. Durch diese ungleiche Ausbildung der Pole ergibt sich im niedrigsten Fall die Polpaarzahl p = 1. Es kann mit den gleichen Spulen sowohl die Grunderregung als auch die Tragerregung erzeugt werden.

Aufgrund der niedrigen Polpaarzahlen wird eine sehr geringe Ummagnetisierungsfrequenz erzeugt, so dass die Wirbelstromverluste entsprechend niedrig sind. Außerdem wir durch die axiale Flussführung eine geringe Eindringtiefe erreicht.

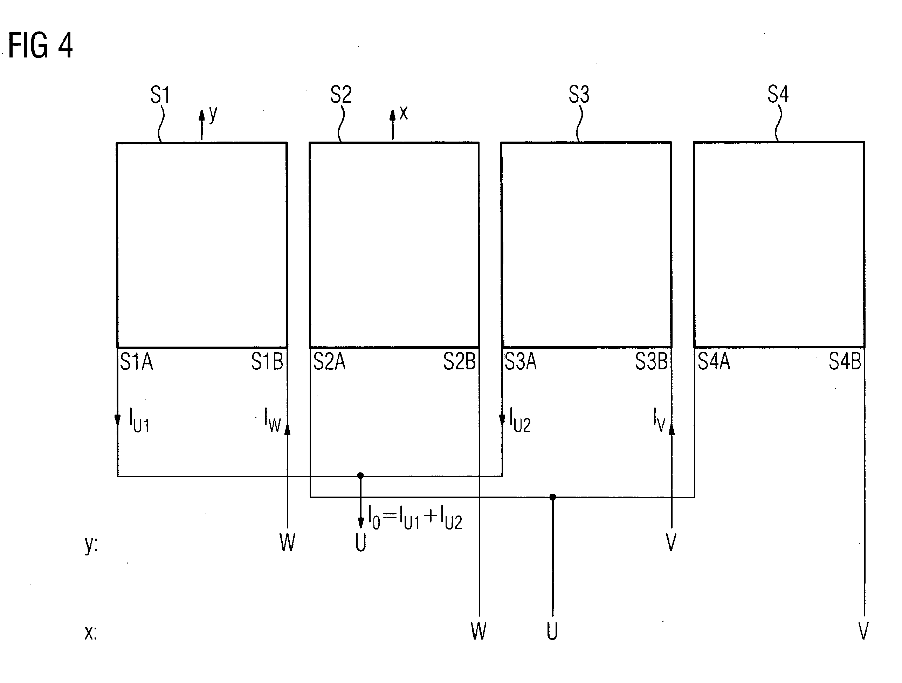

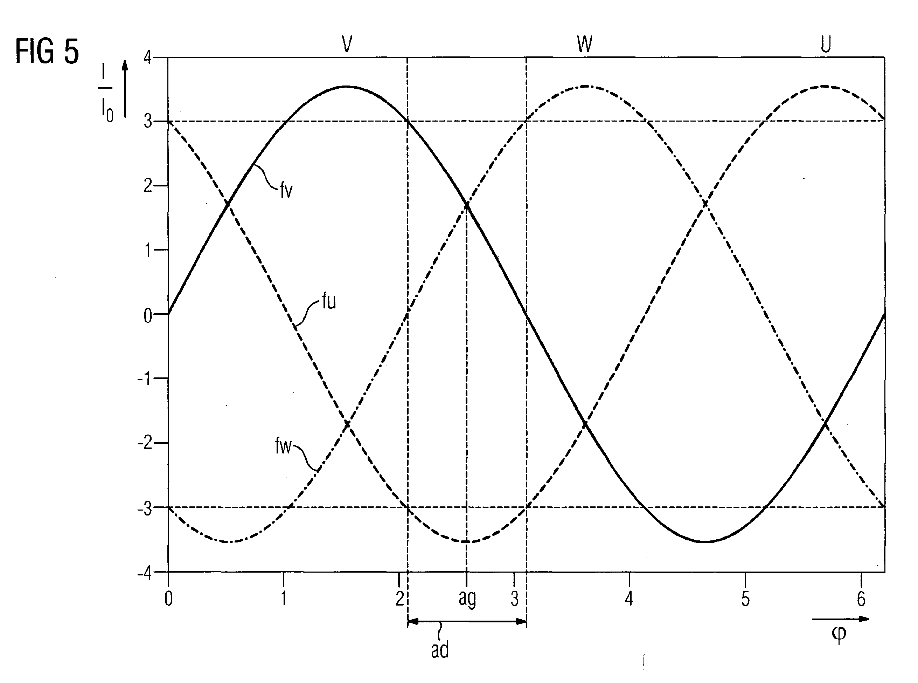

Anhand der FIG 4 und FIG 5 wird nun erläutert, wie das magnetische Radiallager angesteuert werden kann, um den Rotor stabil in dem Stator zu halten. FIG 4 zeigt hierzu eine Schaltung der Spulen S1 bis S4. Jede der Spulen besitzt einen ersten Anschluss und einen zweiten Anschluss. Demnach hat die erste Spule S1 einen ersten Anschluss S1A und einen zweiten Anschluss S1B. Die zweite Spule S2 hat einen ersten Anschluss S2A und einen zweiten Anschluss S2B. Die dritte Spule besitzt einen ersten Anschluss S3A und einen zweiten Anschluss S3B. Schließlich weist die vierte Spule S4 einen ersten Anschluss S4A und einen zweiten Anschluss S4B auf. Die Spulen S1 und S3 stehen sich auf der zweiten Achse Y und die Spulen S2 und S4 auf der ersten Achse X gegenüber.

Gemäß der vorliegenden Erfindung werden die Spulen S1 bis S4 durch einen dreiphasigen Strom angesteuert. Dieser Strom besitzt die Phasen U, V und W. Zur Steuerung bzw. Regelung der Kräfte entlang der Y-Achse (zweite Achse) sind die ersten Anschlüsse S1A und S3A der ersten Spule S1 und der dritten Spule S3 mit der Phase U verbunden. Der zweite Anschluss S1B der ersten Spule S1 ist mit Phase W und der zweite Anschluss S3B der dritten Spule S3 ist mit der Phase V verbunden. Analog sind zur Steuerung bzw. Regelung der Kräfte entlang der X-Achse (erste Achse) die ersten Anschlüsse S2A und S4A der zweiten Spule S2 und der vierten Spule S4 mit der Phase U, der zweite Anschluss S2B der zweiten Spule S2 mit der Phase W und der zweite Anschluss S4B der vierten Spule S4 mit der Phase V verbunden. Dementsprechend fließt beispielsweise in die Spule S1 ein Strom I_{W} und aus ihr heraus ein Strom I_{U1}, wobei I_{W} = I_{U1}. In die Spule S3 fließt der Strom I_{V} und aus ihr heraus der Strom I_{U2}, wobei I_{V} = I_{U2}. Aus den Spulen S1 und S3 fließt damit der Strom I_{U} = I_{U1} + I_{U2.} Sind die Ströme I_{V} und I_{W} der Phasen V und W gleich, so fließt durch alle Spulen der gleiche Strom. Der Rotor 3 wird dann von allen vier Spulen mit gleicher Kraft angezogen. Dies entspricht der Grunderregung.

In FIG 5 ist ein Phasendiagramm der Ströme der Phasen U, V und W wiedergegeben. Erfindungsgemäß wird jede Phase entsprechend den dort dargestellten Sinusfunktionen fu, fv, fw bewertet.

Diese Bewertung und eine entsprechende Ansteuerung nimmt eine Ansteuervorrichtung vor, die an die Spulen S1 bis S4 angeschlossen ist.

Um den sinusförmigen Verlauf dieser Funktionen fu, fv und fw erkennen zu können, ist jeweils eine ganze Periode (2n) der jeweiligen Funktion dargestellt. Es ergibt sich demnach für einen bestimmten Arbeitspunkt, der einem Winkel ϕ entspricht, jeweils ein relativer Stromwert I/I₀. Die Sinusfunktionen fu, fv und fw sind jeweils um 120° (2n/3) gegeneinander phasenverschoben.

Wie oben erwähnt wurde, fließt bei der Grunderregung durch alle Spulen der gleiche Strom. Insbesondere fließt demnach an den Anschlüssen S1B und S3B der Phasen W und V der gleiche Strom. Dies aber bedeutet, dass sich die Sinusfunktionen fv und fw bei dem Arbeitspunkt der Grunderregung schneiden müssen. Dem Schnittpunkt ist in FIG 5 ein Arbeitspunkt ag der Grunderregung zugeordnet. In diesem Arbeitspunkt ag ergibt sich betragsmäßig ein Maximum der Bewertungs- bzw. Sinusfunktion fu der Phase U. Der Betrag der Funktion fu an dieser Stelle ist doppelt so hoch wie der der Funktionen fv und fw. Dementsprechend ist der Strom der Phase U doppelt so groß wie derjenige der Phase V oder W. Grundsätzlich entspricht der Strom der Phase U immer der Summe der Ströme der Phasen V und W, was unmittelbar aus FIG 4 hervorgeht.

Um den Arbeitspunkt ag der Grunderregung herum lässt sich ein Arbeitsbereich ab definieren. Beispielsweise beträgt die Ausdehnung des Arbeitsbereichs ab n/3. Die Grenzwerte bzw. Grenzen des Arbeitsbereichs ab liegen demnach bei ag +/- n/6. An diesen Grenzen werden bzgl. der Achse X oder der Achse Y eine Maximalkraft in der einen Richtung oder in der entgegengesetzten Richtung ausgeübt. Für die Ansteuereinrichtung genügt es also, den Arbeitspunkt (Ansteuerwinkel ϕ) im Arbeitsbereich ab zu wählen, um die notwendigen Kräfte bzw. Gegenkräfte zu erzeugen. Dies gilt sowohl für die Kräfte auf der X-als auch auf der Y-Achse.

Dies kann nochmal anhand eines Beispiels verdeutlicht werden: Fließt in der Phase W kein Strom (linke Grenze des Arbeitsbereichs ab), so fließt durch die Spule S1 kein Strom. Der Strom in den Phasen U und V ist dann gleich aber entgegengesetzt. Die Spule S1 erzeugt damit kein Feld, während die Spule S3 maximales Feld produziert. Dementsprechend zieht das magnetische Radiallager den Rotor 3 gemäß FIG 2 auf der Y-Achse nach links unten. Entsprechendes gilt für alle anderen Arbeitspunkte.

Die erfindungsgemäße Kombination eines axialen Felds mit einer dreiphasigen Einspeisung bei einem magnetischen Radiallager löst die wesentlichen Probleme derartiger Lager, insbesondere diejenigen der Wirbelstromverluste. Insgesamt kann ein derartig realisiertes magnetisches Radiallager sehr kompakt gebaut werden. Damit wird der Lagerabstand reduziert, und die Wellenbiegeschwingungsfrequenz wird erhöht. Außerdem können die Herstellungskosten sehr gering gehalten werden.

## Patentansprüche

1. Magnetisches Radiallager mit
- einem Stator (4), der eine erste Spule (S1), eine zweite Spule (S2), eine dritte Spule (S3) und eine vierte Spule (S4) aufweist, von denen sich die erste Spule (S1) und die dritte Spule (S3) auf einer ersten Achse (Y) sowie die zweite und die vierte Spule auf einer zweiten Achse (X) gegenüberstehen,
**gekennzeichnet durch**
- eine Ansteuereinrichtung zum Ansteuern der Spulen des Stators mit einem 3-phasigen Strom, der die Phasen U, V und W aufweist, wobei
- zur Steuerung der ersten Achse (Y)
∘ ein erster Anschluss (S2A) der zweiten Spule (S2) und ein erster Anschluss (S4A) der vierten Spule (S4) mit der Phase U,
∘ ein zweiter Anschluss (S2B) der zweiten Spule (S2) mit der Phase W und
∘ ein zweiter Anschluss (S4B) der vierten Spule (S4) mit der Phase V verbunden ist,
- zur Steuerung der zweiten Achse (X)
∘ ein erster Anschluss (S1A) der ersten Spule (S1) und ein erster Anschluss (S3A) der dritten Spule (S3) mit der Phase U,
∘ ein zweiter Anschluss (S1B) der ersten Spule (S1) mit der Phase W und
∘ ein zweiter Anschluss (S3B) der dritten Spule (S3) mit der Phase V verbunden ist,
- die Amplituden der Ströme der Phasen U, V und W jeweils mit einer untereinander um 120 Grad phasenverschoben Sinusfunktion (fu, fv, fw) bewertet sind,
- die Ansteuerung **durch** die Ansteuereinrichtung für jede der Achsen (X, Y) jeweils in einem variablen Arbeitspunkt erfolgt, der für die einzelnen Phasen entsprechend der jeweiligen Sinusfunktion den Wert für die Bewertung der Amplituden festlegt.

2. Magnetisches Radiallager nach Anspruch 1, wobei die erste Achse (Y) senkrecht auf der zweiten Achse (X) steht.

3. Magnetisches Radiallager nach Anspruch 1 oder 2, wobei für den variablen Arbeitspunkt ein Arbeitsbereich (ab) definiert ist, der zwischen zwei Grenzwerten liegt, welche von einem Winkelwert (ag) einen vorgegebenen Abstand besitzen, wobei der Winkelwert einem Schnittpunkt zweier der Sinusfunktionen zugeordnet ist.

4. Magnetisches Radiallager nach Anspruch 3, wobei der Arbeitsbereich (ab) eine Ausdehnung von n/3 aufweist.

5. Magnetisches Radiallager nach einem der vorhergehenden Ansprüche, wobei die Spulen (S1 bis S4) des Stators (4) jeweils bzgl. der Rotationsachse des Radiallagers axiale Spulen sind.

6. Magnetisches Radiallager nach einem der vorhergehenden Ansprüche, wobei die Spulen (S1 bis S4) des Stators (4) den gleichen Wickelsinn besitzen.

7. Magnetisches Radiallager nach einem der vorhergehenden Ansprüche, wobei mit der Ansteuereinrichtung eine Grunderregung der Spulen mit einer Polpaarzahl null einstellbar ist.

8. Magnetisches Radiallager nach einem der vorhergehenden Ansprüche, wobei mit der Ansteuereinrichtung eine Tragerregung der Spulen mit einer Polpaarzahl eins einstellbar ist.

9. Verfahren zum Steuern eines magnetischen Radiallagers mit einem Stator (4), der eine erste Spule (S1), eine zweite Spule (S2), eine dritte Spule (S3) und eine vierte Spule (S4) aufweist, von denen sich die erste Spule und die dritte Spule auf einer ersten Achse (Y) sowie die zweite und die vierte Spule auf einer zweiten Achse (X) gegenüberstehen, **gekennzeichnet durch**
- Ansteuern der Spulen des Stators mit einem 3-phasigen Strom, der die Phasen U, V und W aufweist, wobei
- zur Steuerung der ersten Achse (Y)
∘ ein erster Anschluss (S2A) der zweiten Spule (S2) und ein erster Anschluss (S4A) der vierten Spule (S4) mit der Phase U,
∘ ein zweiter Anschluss (S2B) der zweiten Spule (S2) mit der Phase W und
∘ ein zweiter Anschluss (S4B) der vierten Spule (S4) mit der Phase V verbunden ist,
- zur Steuerung der zweiten Achse (X)
∘ ein erster Anschluss (S1A) der ersten Spule (S1) und ein erster Anschluss (S3A) der dritten Spule (S3) mit der Phase U,
∘ ein zweiter Anschluss (S1B) der ersten Spule (S1) mit der Phase W und
∘ ein zweiter Anschluss (S3B) der dritten Spule mit der Phase V verbunden ist,
- die Amplituden der Ströme der Phasen U, V und W jeweils mit einer untereinander um 120 Grad phasenverschoben Sinusfunktion (fu, fv, fw) bewertet werden,
- die Ansteuerung für jede der Achsen (X, Y) jeweils in einem variablen Arbeitspunkt erfolgt, der für die einzelnen Phasen entsprechend der jeweiligen Sinusfunktion den Wert für die Bewertung der Amplituden festlegt.

## Claims

1. Magnetic radial bearing having
- a stator (4) which has a first coil (S1), a second coil (S2), a third coil (S3) and a fourth coil (S4), the first coil (S1) and the third coil (S3) thereof on a first axis (Y) opposing the second coil and the fourth coil thereof on a second axis (X),
**characterised by**
- an actuation device for actuating the coils of the stator with a 3-phase current which has the phases U, V and W, wherein
- for controlling the first axis (Y)
∘ a first terminal (S2A) of the second coil (S2) and a first terminal (S4A) of the fourth coil (S4) are connected to the phase U,
∘ a second terminal (S2B) of the second coil (S2) is connected to the phase W and
∘ a second terminal (S4B) of the fourth coil (S4) is connected to the phase V,
- for controlling the second axis (X)
∘ a first terminal (S1A) of the first coil (S1) and a first terminal (S3A) of the third coil (S3) are connected to the phase U,
∘ a second terminal (S1B) of the first coil (S1) is connected to the phase W and
∘ a second terminal (S3B) of the third coil (S3) is connected to the phase V,
- the amplitudes of the currents of the phases U, V and W are evaluated in each case by a sine function (fu, fv, fw), phase-shifted relative to one another through 120 degrees, and
- the actuation takes place in each case by means of the actuation device for each of the axes (X, Y) at a variable working point, which fixes the value for the evaluation of the amplitudes for the individual phases according to the respective sine function.

2. Magnetic radial bearing according to claim 1, wherein the first axis (Y) is located perpendicular to the second axis (X) .

3. Magnetic radial bearing according to claim 1 or 2, wherein a working range (ab) is defined for the variable working point, said working range lying between two threshold values which are at a predetermined interval from an angle value (ag), wherein the angle value is assigned to a point of intersection of two of the sine functions.

4. Magnetic radial bearing according to claim 3, wherein the working range (ab) is increased by n/3.

5. Magnetic radial bearing according to one of the preceding claims, wherein the coils (S1 to S4) of the stator (4) in each case are axial coils relative to the rotational axis of the radial bearing.

6. Magnetic radial bearing according to one of the preceding claims, wherein the coils (S1 to S4) of the stator (4) have the same winding direction.

7. Magnetic radial bearing according to one of the preceding claims, wherein a basic excitation of the coils with a pole-pair number of zero may be adjusted by the actuation device.

8. Magnetic radial bearing according to one of the preceding claims, wherein a load-bearing excitation of the coils with a pole-pair number of one may be adjusted by the actuation device.

9. Method for controlling a magnetic radial bearing having a stator (4), which has a first coil (S1), a second coil (S2), a third coil (S3) and a fourth coil (S4), the first coil and the third coil thereof on a first axis (Y) opposing the second coil and the fourth coil thereof on a second axis (X), **characterised by**
- actuating the coils of the stator with a 3-phase current which has the phases U, V and W, wherein
- for controlling the first axis (Y)
∘ a first terminal (S2A) of the second coil (S2) and a first terminal (S4A) of the fourth coil (S4) are connected to the phase U,
∘ a second terminal (S2B) of the second coil (S2) is connected to the phase W and
∘ a second terminal (S4B) of the fourth coil (S4) is connected to the phase V,
- for controlling the second axis (X)
∘ a first terminal (S1A) of the first coil (S1) and a first terminal (S3A) of the third coil (S3) are connected to the phase U,
∘ a second terminal (S1B) of the first coil (S1) is connected to the phase W and
∘ a second terminal (S3B) of the third coil is connected to the phase V,
- the amplitudes of the currents of phases U, V and W are evaluated in each case by a sine function (fu, fv, fw), phase-shifted relative to one another by 120 degrees,
- the actuation for each of the axes (X, Y) takes place in each case at a variable working point, which fixes the value for the evaluation of the amplitudes for the individual phases according to the respective sine function.

## Revendications

1. Palier radial magnétique comprenant
- un stator ( 4 ) qui a une première bobine ( S1 ), une deuxième bobine ( S2 ), une troisième bobine ( S3 ) et une quatrième bobine ( S4 ), parmi lesquelles la première bobine ( S1 ) et la troisième bobine ( S3 ) sont en opposition sur un premier axe ( Y ) et la deuxième et la quatrième bobines sur un deuxième axe ( X ),
**caractérisé par**
- un dispositif d'excitation des bobines du stator par un courant triphasé qui a les phases U, V et W, dans lequel
- pour la commande du premier axe ( Y )
∘ une première borne ( S2A ) de la deuxième bobine ( S2 ) et une première borne ( S4A ) de la quatrième bobine ( S4 ) sont reliées à la phase ( U ),
∘ une deuxième borne ( S2B ) de la deuxième bobine est reliée à la phase ( W ) et
∘ une deuxième borne ( S4B ) de la quatrième bobine ( S4 ) est reliée à la phase ( V ),
- pour la commande du deuxième axe ( X )
∘ une première borne ( S1A ) de la première bobine ( S1 ) et une première borne ( S3 ) de la troisième bobine ( S3 ) sont reliées à la phase ( U ),
∘ une deuxième borne ( S1B ) de la première bobine ( S1 ) est reliée à la phase ( W ) et
∘ une deuxième borne ( S3B ) de la troisième bobine ( S3 ) est reliée à la phase ( V ),
- les amplitudes des courants des phases U, V et W sont évaluées respectivement par une fonction ( fu, fv, fw ) sinus déphasée entre elles de 120°,
- l'excitation par le dispositif d'excitation pour chacun des axes ( X, Y ) s'effectue respectivement à un point de travail variable qui fixe, pour les diverses phases, la valeur de l'évaluation des amplitudes conformément à la fonction sinus respective.

2. Palier radial magnétique suivant la revendication 1, dans lequel le premier axe ( Y ) est perpendiculaire au deuxième axe ( X ) .

3. Palier radial magnétique suivant la revendication 1 ou 2, dans lequel il est défini pour le point de travail variable une plage ( ab ) de travail qui se trouve entre deux valeurs limites, qui ont une distance donnée à l'avance par une valeur ( ag ) angulaire, la valeur angulaire étant associée à un point d'intersection de deux des fonctions sinus.

4. Palier radial magnétique suivant la revendication 3, dans lequel la plage ( ab ) de travail a une étendue de n/3.

5. Palier radial magnétique suivant l'une des revendications précédentes, dans lequel les bobines ( S1 et S4 ) du stator ( 4 ) sont des bobines axiales respectivement par rapport à l'axe de rotation du palier radial.

6. Palier radial magnétique suivant l'une des revendications précédentes, dans lequel les bobines ( S1 et S4 ) du stator ( 4 ) ont le même sens de bobinage.

7. Palier radial magnétique suivant l'une des revendications précédentes dans lequel, par le dispositif d'excitation, une excitation de base des bobines ayant un certain nombre de paires de pôle est réglable à zéro.

8. Palier radial magnétique suivant l'une des revendications précédentes dans lequel, par le dispositif d'excitation, une excitation de porteuse des bobines ayant un certain nombre de paires de pôle est réglable à un.

9. Procédé de commande d'un palier radial magnétique ayant un stator ( 4 ), qui a une première bobine ( S1 ), une deuxième bobine ( S2 ), une troisième bobine ( S3 ) et une quatrième bobine ( S4 ) parmi lesquelles la première bobine et la troisième bobine sont opposition sur un premier axe ( Y ) et la deuxième et la quatrième bobines sur un deuxième axe ( X ), **caractérisé par**
- l'excitation des bobines du stator par un courant triphasé qui a les phases U, V et W, dans lequel
- pour la commande du premier axe ( Y )
∘ une première borne ( S2A ) de la deuxième bobine ( S2 ) et une première borne ( S4A ) de la quatrième bobine ( S4 ) sont reliées à la phase ( U ),
∘ une deuxième borne ( S2B ) de la deuxième bobine est reliée à la phase ( W ) et
∘ une deuxième borne ( S4B ) de la quatrième bobine ( S4 ) est reliée à la phase ( V ),
- pour la commande du deuxième axe ( X )
∘ une première borne ( S1A ) de la première bobine ( S1 ) et une première borne ( S3 ) de la troisième bobine ( S3 ) sont reliées à la phase ( U ),
∘ une deuxième borne ( S1B ) de la première bobine ( S1 ) est reliée à la phase ( W ) et
∘ une deuxième borne ( S3B ) de la troisième bobine ( S3 ) est reliée à la phase ( V ),
- on évalue les amplitudes des phases U, V et W respectivement par une fonction ( fu, fv, fw ) sinus déphasée de 120° entre elles,
- on effectue l'excitation pour chacun des axes ( X, Y ) respectivement en un point de travail variable, qui fixe pour les diverses phases la valeur de l'évaluation des amplitudes conformément à la fonction sinus respective.
